Europäisches Patentamt

(19) European Patent Office

Office européen des brevets

(11) Veröffentlichungsnummer: **0 112 931**
**B1**

(12) # EUROPÄISCHE PATENTSCHRIFT

(45) Veröffentlichungstag der Patentschrift:
23.04.86

(51) Int. Cl.⁴: **A 01 F 12/60**

(21) Anmeldenummer: **82112079.7**

(22) Anmeldetag: **29.12.82**

(54) **Abdeckvorrichtung für eine Verteilerschnecke einer Erntebergungsmaschine.**

(43) Veröffentlichungstag der Anmeldung:
**11.07.84 Patentblatt 84/28**

(45) Bekanntmachung des Hinweises auf die Patenterteilung:
**23.04.86 Patentblatt 86/17**

(84) Benannte Vertragsstaaten:
**BE DE FR GB IT SE**

(56) Entgegenhaltungen:
**DE - A - 1 812 571**
**DE - B - 1 055 272**
**FR - A - 1 120 296**
**GB - A - 1 064 856**
**GB - A - 2 086 112**
**US - A - 2 627 244**

(73) Patentinhaber: **DEERE & COMPANY, 1 John Deere Road, Moline Illinois 61265 (US)**

(72) Erfinder: **Rohwedder, Helmut, Rosenstrasse 12, D-6660 Zweibrücken 17 (DE)**

(74) Vertreter: **Sartorius, Peter et al, DEERE & COMPANY European Office, Patent Department Postfach 503 Steubenstrasse 36-42, D-6800 Mannheim 1 (DE)**

## Beschreibung

Die Erfindung bezieht sich auf eine Abdeckvorrichtung für eine im oberen Bereich des Sammelbehälters einer Erntebergungsmaschine vorgesehene Verteilerschnecke mit mindestens einer beweglich gelagerten Klappe, die in Abhängigkeit des im Sammelbehälter anwachsenden Füllgutes nach oben ausweicht.

Es ist bereits eine Abdeckvorrichtung für die Verteilerschnecke im Korntank eines Mähdreschers bekannt, die als Unfallschutz ausgebildet ist und die Verteilerschnecke an ihren Längsseiten abdeckt (siehe DE-A-18 12 571). Die Klappe wird in Abhängigkeit des im Sammelbehälter aufgenommenen Füllgutes nach oben verstellt und kann wieder selbsttätig in ihre Ruhelage nach unten zurückbewegt werden. Durch den schwenkbaren Anschluss der Klappe an einer im Sammelbehälter vorgesehenen Halterung kann die Klappe dem Druck des Füllgutes ausweichen und beeinträchtigt dadurch nicht die Wirkung der Schnecke beim Verteilungsvorgang des Erntegutes im Sammelbehälter. Gleichzeitig wird ein ausreichender Unfallschutz während des Arbeitseinsatzes gewährleistet, gleichgültig wie hoch der Sammelbehälter mit Füllgut beschickt worden ist.

Ferner ist es bekannt (US-A-3 246 313), im Sammelbehälter eines Mähdreschers eine einzelne Klappe an einem zweiarmigen Hebel anzuschliessen, der an einer Halterung schwenkbar gelagert ist. An dem Hebelarm befindet sich ein elektrischer Schalter, der mit einem am Bedienungsstand vorgesehenen Anzeigegerät wirkungsmässig verbunden ist. Die Klappe liegt ständig gegen die Oberfläche des Füllgutes an und wird über das ansteigende Füllgut nach oben verschwenkt, so dass bei einer bestimmten Lage der Klappe das elektrische Schaltelement einen Impuls am Anzeigegerät im Bedienungsstand auslöst und die Bedienungsperson über die Füllhöhe im Sammelbehälter informiert. Mit einer derartigen Vorrichtung lässt sich lediglich die maximale Füllhöhe im Sammelbehälter erfassen.

Demgegenüber liegt der Erfindung die Aufgabe zugrunde, eine Abdeckvorrichtung für die Verteilerschnecke einer Erntebergungsmaschine zum Schutz der Bedienungsperson vor Verletzungen derart auszubilden und anzuordnen, dass sie gleichzeitig auch als Informationsgeber über den Sammelbehälterinhalt des Mähdreschers einsetzbar ist. Diese Aufgabe ist dadurch gelöst worden, dass an der beweglich gelagerten Klappe ein Messwertumformer angeordnet ist, der bei einer bestimmten Lage der Klappe mit einem im Bereich des Bedienungsstandes vorgesehenen Informationsgeber wirkungsmässig verbindbar ist. Auf diese Weise kann die Abdeckvorrichtung, die als Unfallschutz ausgebildet ist, gleichzeitig auch als Informationsgeber dienen und die Bedienungsperson über die Füllhöhe des Erntegutes im Sammelbehälter rechtzeitig informieren. Um beispielsweise verschiedene Füllphasen des Erntegutes im Sammelbehälter besser erfassen zu können, ist es gemäss der Erfindung vorteilhaft, dass die Abdeckvorrichtung im Bereich seitlich der Verteilerschnecke zahlreiche Klappen aufweist, die nebeneinander angeordnet und in Abhängigkeit des im Sammelbehälter anwachsenden Füllgutes einzeln oder gemeinsam verstellbar sind. Da die Abdeckvorrichtung aus zahlreichen hintereinander angeordneten, einzeln verstellbaren Klappen besteht, kann über jede einzelne Klappe eine entsprechende Füllphase im Sammelbehälter abgetastet und dieser Informationswert an ein Anzeigegerät im Bedienungsstand des Mähdreschers weitergegeben werden. Diese Vorrichtung eignet sich insbesondere bei Sammelbehältern, die von einer Seite her befüllt werden, wobei der Schüttkegel sich von der einen Seitenwand her aufbaut und sich allmählich zur anderen Seitenwand hin vergrössert.

Hierzu ist es gemäss der Erfindung vorteilhaft, dass eine jede Klappe einen elektrischen Schaltkontakt aufweist, der nach Hochschwenken der Klappe gegen einen feststehenden Schaltkontakt zur Anlage bringbar ist und einen Stromkreis zur Stromversorgung des Informationsgebers schliesst. Vorteilhaft ist es ausserdem, dass die Klappe an einer Halterung bzw. an einer Wand schwenkbar angeschlossen ist und über ihre Anlenkstelle hinaus ein Verlängerungsteil zur Aufnahme des Kontaktelementes aufweist, das gegen das der Halterung bzw. der Wand angeordnete Kontaktelement zur Anlage bringbar ist. Durch die Verwendung elektrischer Kontaktelemente lässt sich auf einfache Weise ein Stromkreis zur Stromversorgung des Informationsgebers schliessen, wenn eine bestimmte Menge Erntegut im Sammelbehälter angesammelt worden ist. Das entsprechende Kontaktelement kann auf der Oberfläche der Klappe angeordnet sein und gegen ein im Sammelbehälter feststehendes Kontaktelement zur Anlage gebracht werden. Das Kontaktelement kann in vorteilhafter Weise auch auf dem feststehenden Teil einer Halterung bzw. dem nicht verschwenkbaren Teil der Abdeckvorrichtung vorgesehen werden. Anstelle des Kontaktelementes ist auch ein Elektroschalter an der Klappe anbringbar, der bei einer bestimmten Lage einen Stromkreis schliesst, um die Stromversorgung für den Informationsgeber zu gewährleisten. Ein derartiger Schalter kann beispielsweise als Quecksilberschalter ausgebildet sein. Somit wird durch die Verwendung der zahlreichen hintereinander angeordneten Klappen ein sehr guter Unfallschutz für die Verteilerschnecke gewährleistet und gleichzeitig die Möglichkeit geschaffen, verschiedene Füllphasen des Erntegutes im Sammelbehälter zu erfassen.

Anhand der Zeichnung werden zwei Ausführungsbeispiele einer Abdeckvorrichtung für die Verteilerschnecke eines Sammelbehälters nach der Erfindung erläutert. Es zeigt:

Fig. 1 eine perspektivische Darstellung eines Sammelbehälters mit der erfindungsgemässen Abdeckvorrichtung,

Fig. 2 einen Längsschnitt durch die Abdeckvorrichtung und die zugehörige Verteilerschnecke, und

Fig. 3 ein weiteres Ausführungsbeispiel der Abdeckvorrichtung.

In der Zeichnung ist mit 10 ein Sammelbehälter eines in der Zeichnung der Einfachheit halber nicht dargestellten Mähdreschers bezeichnet, der aus zwei sich in Fahrtrichtung erstreckenden Seitenwänden 12 und 14 sowie querverlaufenden Seitenwänden 16 und 18 und einem V-förmig ausgebildeten Boden 20 besteht. In der einen Seitenwand 12 befindet sich ein Anschlussstutzen 22, in dem eine Entleerungsschnecke 24 drehbar aufgenommen ist, die einem in der Zeichnung nicht dargestellten, an dem Anschlussstutzen 22 anschliessbaren Entleerungsrohr Erntegut zuführt.

An der Aussenseite der Seitenwand 14 verläuft ein Elevatorgehäuse 26, das an seinem oberen Ende ein zylindrisches Schneckengehäuse 28 zur Aufnahme einer auf einer Welle 30 angeordneten Schnecke 32 aufweist. Die Welle 30 ist mit ihrem einen Ende in der Seitenwand 12 und mit ihrem anderen Ende in der Aussenwand des Elevatorgehäuses 26 drehbar aufgenommen. Auf der Welle 30 sind mehrere, mit Abstand zueinander angeordnete, kurze Schneckenwendeln 34 angeordnet, die mit der Schnecke 32 gemeinsam drehen, um eine gleichmässigere Verteilung des Erntegutes im Sammelbehälter 10 zu erhalten. Im Elevatorgehäuse 26 befindet sich ein in der Zeichnung nicht dargestellter, antreibbarer Elevatorförderer, dessen obere Welle eine Zugmittelscheibe 38 zum Antrieb der Schnecke 32 aufweist.

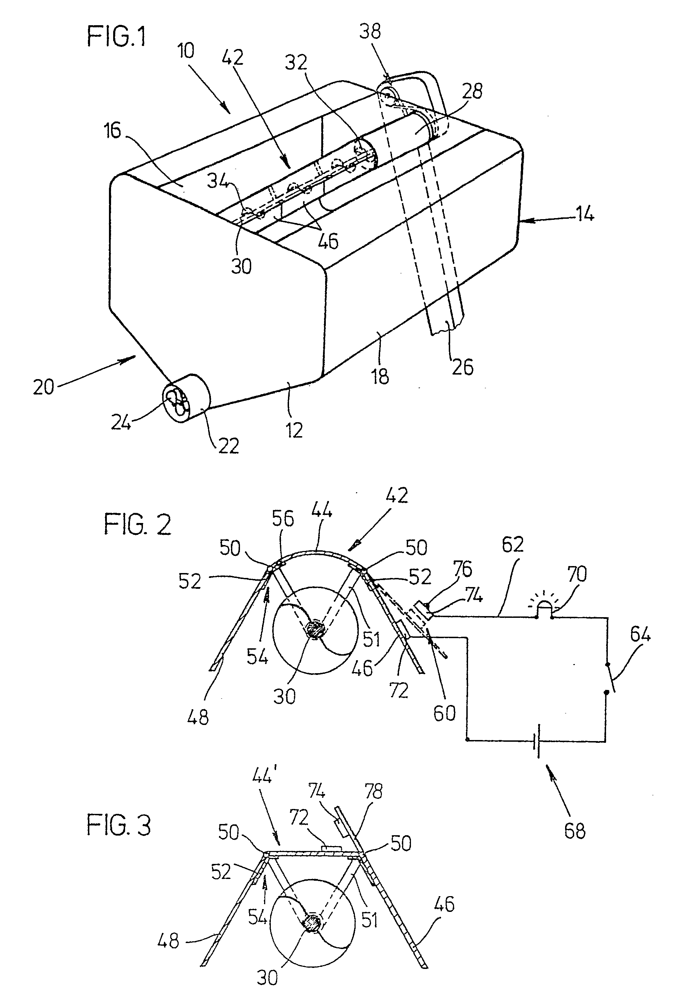

An das Schneckengehäuse 28 schliesst sich eine als Unfallschutz ausgebildete Abdeckvorrichtung 42 an, die aus einer sich in Längsrichtung erstreckenden, gewölbten Wand 44 mit zahlreichen nebeneinander angeordneten, mit Bezug auf Fig. 2 rechten und linken Klappen 46 und 48 besteht. Die Wand 44 ist über eine V-förmige Halterung 51 auf der Welle 30 abgestützt. Es ist jedoch auch möglich, lediglich die beiden aussenliegenden Stirnkanten der Wand 44 einenends mit dem Schneckengehäuse 28 und anderenends mit der Seitenwand 12 des Sammelbehälters 10 fest zu verbinden. Die Klappen 46 und 48 sind über je ein Gelenk 50 mit der Wand 44 schwenkbar verbunden und können zwischen einer annähernd horizontal und geneigt verlaufenden Lage verschwenkt werden. Wie aus Fig. 2 hervorgeht, liegen die Klappen 46 und 48 in ihrer geneigt verlaufenden Lage gegen je einen Schenkel 52 einer Halterung 54 an, die mit einer Wand 44 starr verbunden ist und eine weitere Verschwenkung der Klappen 46 bzw. 48 nach unten begrenzt. Steigt das Erntegut im Sammelbehälter 10 an, so werden die Klappen 46 und 48 über das ansteigende Erntegut nacheinander verschwenkt und allmählich in eine annähernd horizontal verlaufende Lage gebracht. Um die Füllhöhe des Erntegutes über die gesamte Breite des Sammelbehälters anzeigen zu können, weisen beispielsweise die einzelnen Klappen 46 je einen Messwertumformer 60 auf, der über einen elektrischen Stromkreis 62 und einen Schalter 64 an eine Fahrzeugbatterie 68 angeschlossen ist. Bei einer bestimmten Lage der Klappe 46 wird beim geschlossenen Schalter 64 über den Messwertumformer 60 und den Stromkreis 62 ein Schaltimpuls an einen Informationsgeber, der im Ausführungsbeispiel gemäss Fig. 2 als Warnleuchte 70 ausgebildet ist, weitergeleitet und informiert dadurch die Bedienungsperson der Erntebergungsmaschine am Fahrerstand über die Füllhöhe des Erntegutes im Sammelbehälter 10.

Der Messwertumformer 60 kann beispielsweise als Elektroschalter ausgebildet sein und zwei Schaltkontakte aufweisen, wobei der eine Schaltkontakt 72 an der entsprechenden Klappe 46 und der andere Schaltkontakt 74 an einer Halterung 76 angeordnet ist, die mit den Seitenwänden 12 und 14 des Sammelbehälters 10 verbunden sein kann. Der Schaltkontakt 74 befindet sich im Bereich der Oberkante des Sammelbehälters 10 und schliesst den Stromkreis 62, wenn die Klappe 46 in eine Lage (gestrichelte Darstellung) gemäss Fig. 2 bzw. in eine horizontal verlaufende Lage verschwenkt worden ist. Da mehrere kurze Klappen 46 hintereinander an der Wand 44 angeschlossen sind, wird über die gesamte Breite des Sammelbehälters 20 die genaue Füllhöhe des Erntegutes im Sammelbehälter 10 abgetastet und am Bedienungsstand der Erntebergungsmaschine angezeigt.

Wie aus Fig. 3 hervorgeht, kann die Klappe 46 über ihr Gelenk 50 hinaus ein Verlängerungsteil 78 aufweisen, an dessen Unterseite das Kontaktelement 74 fest angeordnet ist, das mit dem auf der flach ausgebildeten Wand 44' vorgesehenen Kontaktelement 72 zusammenwirkt. Die Kontaktelemente 72 und 74 können beispielsweise als Riedkontakte ausgebildet sein. Anstelle des Messwertumformers 60 kann beispielsweise auch auf den einzelnen Klappen 46 je ein Quecksilberschalter angebracht sein, der bei einer bestimmten Neigung der Klappe 46 den Stromkreis 62 schliesst und dadurch die Warnleuchte 70 in Betrieb setzt. Anstelle der Warnleuchte 70 kann auch ein Messinstrument verwendet werden, über das die Füllhöhe des Erntegutes im Sammelbehälter fortlaufend angezeigt wird.

**Patentansprüche**

1. Abdeckvorrichtung für eine im oberen Bereich des Sammelbehälters einer Erntebergungsmaschine vorgesehene Verteilerschnecke mit mindestens einer beweglich gelagerten Klappe, die in Abhängigkeit des im Sammelbehälter anwachsenden Füllgutes nach oben ausweicht, dadurch gekennzeichnet, dass an der beweglich gelagerten Klappe (46 bzw. 48) ein Messwertumformer (60) angeordnet ist, der bei einer bestimmten Lage der Klappe mit einem im Bereich des Bedienungsstandes vorgesehenen Informationsgeber, z.B. einer Warnleuchte (70), wirkungsmässig verbindbar ist.

2. Abdeckvorrichtung nach Anspruch 1, dadurch gekennzeichnet, dass die Abdeckvorrichtung (42) im Bereich seitlich von der Verteilerschnecke, z.B. einer Schneckenwendel (34), zahlreiche Klappen (46 bzw. 48) aufweist, die neben-

# 0 112 931

einander angeordnet und in Abhängigkeit des im Sammelbehälter (10) anwachsenden Füllgutes einzeln oder gemeinsam verstellbar sind.

3. Abdeckvorrichtung nach den Ansprüchen 1 und 2, dadurch gekennzeichnet, dass eine jede Klappe (46) einen elektrischen Schaltkontakt (72) aufweist, der nach Hochschwenken der Klappe (46) gegen einen feststehenden Schaltkontakt (74) zur Anlage bringbar ist und einen Stromkreis (62) zur Stromversorgung des Informationsgebers, z.B. die Warnleuchte (70), schliesst.

4. Abdeckvorrichtung nach einem oder mehreren der vorherigen Ansprüche, dadurch gekennzeichnet, dass die Klappe (46) an einer Halterung (51) bzw. an einer Wand (44') schwenkbar angeschlossen ist und über ihre Anlenkstelle hinaus ein Verlängerungsteil (78) zur Aufnahme des einen Kontaktelementes (74) aufweist, das gegen das auf der Halterung bzw. der Wand (44') angeordnete andere Kontaktelement (72) zur Anlage bringbar ist.

## Claims

1. A cover arrangement for a distributor screw provided in the upper region of the collecting container of a crop pick-up machine, having at least one movably mounted flap which deflects upwardly in dependence on the increasing amount of material filling the collecting container, characterised in that disposed on the movably mounted flap (46 or 48) is a measuring transducer (60) which, when the flap is in a given position, can be operatively connected to a giver of information, for example a warning lamp (70), which is provided in the region of the operator station.

2. A cover arrangement according to Claim 1, characterised in that in the region laterally of the distributor screw, for example a screw flight (34), the cover arrangement (42) has numerous flaps (46 or 48) which are arranged in juxtaposed relationship and which are displaceable individually or jointly in dependence on the increasing amount of material filling the collecting container (10).

3. A cover arrangement according to Claims 1 and 2, characterised in that each flap (46) has an electrical switching contact (72) which, after the flap (46) has pivoted upwardly, can be brought into contact against a stationary switching contact (76) and closes a circuit (62) for supplying power to the giver of information, for example the warning lamp (70).

4. A cover arrangement according to one or more of the preceding claims, characterised in that the flap (46) is pivotably connected to a holder (51) or to a wall (44') and is provided beyond its point of pivotal mounting with an extension portion (78) for carrying the one contact element (74) which can be brought into contact against the other contact element (72) which is disposed on the holder or the wall (44').

## Revendications

1. Dispositif de capotage pour vis répartitrice prévue dans la partie supérieure de la trémie formant réceptacle d'une machine de récolte, comportant au moins un volet monté de façon mobile, qui s'efface vers le haut en fonction de la quantité de produits s'accumulant dans la trémie, caractérisé en ce qu'il est prévu sur le volet (46 ou 48) monté de façon mobile un transducteur de valeur de mesure (60) qui, pour une position déterminée du volet, peut être relié fonctionnellement à un élément indicateur, par exemple une lampe d'avertissement 70, prévu au voisinage du poste de conduite.

2. Dispositif de capotage suivant la revendication 1, caractérisé en ce que le dispositif de capotage (42) comporte, dans une zone disposée latéralement par rapport à la vis répartitrice, par exemple un filet de vis 34, de nombreux volets (46 ou 48) qui sont disposés l'un à côté de l'autre et qui sont déplaçables indépendamment ou conjointement en fonction de la quantité de produits s'accumulant dans la trémie (10).

3. Dispositif de capotage suivant les revendications 1 et 2, caractérisé en ce que chaque volet (46) comporte un contact électrique (72) qui, après basculement vers le haut du volet (46), peut être amené dans une position d'application contre un contact de commutation fixe (74), en fermant un circuit (62), pour l'alimentation en courant de l'élément indicateur, par exemple la lampe d'avertissement 70.

4. Dispositif de capotage suivant une ou plusieurs des revendications précédentes, caractérisé en ce que le volet (46) est relié de façon pivotante à un support (51) ou à une paroi (44') et comporte, au-delà de son point d'articulation, une partie formant prolongement (78) pour la réception de l'un des éléments formant contacts (74), lequel peut être amené dans une position d'application contre l'autre élément formant contact (72) disposé sur le support ou sur la paroi (44').

4

FIG.1

FIG. 2

FIG. 3